(19) Europäisches Patentamt
European Patent Office
Office européen des brevets

(11) Veröffentlichungsnummer: **0 048 430**
**B1**

(12) **EUROPÄISCHE PATENTSCHRIFT**

(45) Veröffentlichungstag der Patentschrift: **19.12.84**

(51) Int. Cl.³: **C 09 K 5/00**

(21) Anmeldenummer: **81107256.0**

(22) Anmeldetag: **15.09.81**

(54) **Korrosions- und kavitationshemmende Kühlflüssigkeit.**

(30) Priorität: **19.09.80 DE 3035326**

(43) Veröffentlichungstag der Anmeldung: **31.03.82 Patentblatt 82/13**

(45) Bekanntmachung des Hinweises auf die Patenterteilung: **19.12.84 Patentblatt 84/51**

(84) Benannte Vertragsstaaten: **AT BE CH DE FR GB IT LI NL SE**

(56) Entgegenhaltungen:
**GB-A- 868 990**
**GB-A- 2 009 133**
**US-A- 2 790 779**
**US-A- 3 629 111**
**US-A- 3 787 227**

(73) Patentinhaber: **HOECHST AKTIENGESELLSCHAFT**
**Postfach 80 03 20**
**D-6230 Frankfurt am Main 80 (DE)**

(72) Erfinder: **Peters, Heinrich, Dr.**
**Robert-Koch-Strasse 201**
**D-8263 Burghausen/Salzach (DE)**
Erfinder: **Surma, Erich**
**Hütweg 49**
**D-8261 Garching/Alz (DE)**

**EP 0 048 430 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft eine korrosions- und kavitationshemmende Kühlflüssigkeit, insbesondere für Verbrennungsmotoren.

Zum Kühlen von technischen Einrichtungen wie Wärmekraftmaschinen, Pumpen und dergleichen werden im allgemeinen Wasser, und im Falle von Frostgefahr mehrwertige Alkohole wie Ethylenglykol, Propylenglykol und Glycerin oder Mischungen von Wasser und mehrwertigen Alkoholen eingesetzt. Zur Erreichung einer optimalen Funktion werden verschiedene Hilfsmittel in wirksamer Menge, vorzugsweise korrosions- und kavitationshemmende Verbindungen, gegebenenfalls auch pH-Wert-Stabilisatoren und Antischaummittel, zugesetzt. Die Kühlflüssigkeiten sollen nämlich einerseits eine gute Kühlwirkung liefern und andererseits keine Schädigung an dem in der Regel aus metallischen Werkstoffen bestehenden Kühlsystem hervorrufen, insbesondere keine Schädigung durch Korrosion und Kavitation.

Während die Schädigung des Werkstoffes durch Korrosion auf einem rein chemischen Angriff des Werkstoffes beruht, spielen bei der Kavitation auch physikalische Erscheinungen eine wesentliche Rolle. Die Kavitationsschädigung zeigt sich im allgemeinen in Form von Aushöhlung oder Hohlraumbildung, wobei die Oberfläche des Werkstoffes aufgerauht und schwammartig zerstört wird.

In der deutschen Offenlegungsschrift 14 92 524 wird ein korrosionshemmendes und Kunststoffe, vorzugsweise Elastomere, nicht angreifendes Frostschutzmittel auf der Basis von Glykolen und/oder Glycerin beschrieben. Die inhibitorische Wirkung wird durch einen Zusatz von Alkalitetraborat, Merkaptanen, sulfurierten Ethern und/oder Alkalisilikaten erreicht. Um die Schaumbildung während des Umlaufes der Kühlflüssigkeit im Kühlkreislauf zu vermeiden, werden geringe Mengen an aliphatischen höheren Alkoholen und Celluloseethern zugesetzt. Der pH-Wert des Frostschutzmittels wird mit Hilfe einer entsprechenden Menge an Alkalihydroxid oder Alkalicarbonat reguliert.

Diese bekannte Kühlflüssigkeit ist wohl antikorrosiv ausgerüstet, sie weist jedoch eine relativ geringe kavitationshemmende Wirkung auf.

Aus den deutschen Patentschriften 12 39 137, 12 39 138 und 12 63 398 sind Kühlflüssigkeiten für Verbrennungsmotoren bekannt, die im wesentlichen aus a) Wasser und/oder Alkylenglykolen (Frostschutzmittel) als Hauptbestandteil, b) einer wirksamen Menge von üblichen Antikorrosionsmitteln und c) einer wirksamen Menge von kavitationshemmenden Verbindungen bestehen.

Als kavitationshemmende Verbindungen werden höhere Alkohole, vorzugsweise einwertige und zweiwertige Alkohole mit 6 bis 20 Kohlenstoffatomen, Polyvinylpyrrolidon mit einem mittleren Molekulargewicht von 300 000 bis 1 000 000 und Umsetzungsprodukte von aktive Wasserstoffatome tragenden organischen Verbindungen mit einem Alkylenoxid, vorzugsweise Oxalkylenglykole eingesetzt.

Diese Kühlflüssigkeiten weisen eine zufriedenstellende Korrosionsinhibierung auf. Die verwendeten Korrosionsinhibitoren sind mit der Hauptkomponente verträglich und sie geben auch einen relativ guten Korrosionsschutz. Dagegen läßt aber das Verhalten und die Wirkung der kavitationshemmenden Verbindungen zu wünschen übrig.

Kavitationshemmende Substanzen sollen vor allem einen sehr guten Schutz gegen Kavitation liefern, und zwar unabhängig von der Art des metallischen Werkstoffes. In neuerer Zeit werden insbesondere die Automobilmotoren zunehmend aus Leichtmetallen, vorzugsweise aus Aluminium oder Aluminiumlegierungen, hergestellt. Leichtmetalle sind aber weit mehr kavitationsgefährdet als Schwermetalle, beispielsweise Grauguß. Kavitationshemmende Substanzen müssen daher insbesondere auch gegenüber Leichtmetallen wirksam sein. Darüberhinaus sollten sie auch noch eine Reihe weiterer Forderungen erfüllen. Darunter sind insbesondere zu nennen : genügende Löslichkeit in Wasser und in ein- und mehrwertigen Alkoholen, vorzugsweise Glycerin, Alkylenglykolen und Oxalkylenglykolen ; Verträglichkeit mit den verwendeten Korrosionsinhibitoren ; keine oder keine nennenswerte Entmischungsneigung sowohl bei tiefen als auch bei höheren Temperaturen ; keine oder keine nennenswerte Neigung zur Schaumbildung ; und Inertheit gegenüber Kunststoffen, vorzugsweise gegenüber Elastomeren.

In der US-A-3 629 111 ist eine Korrosionsinhibitor-Kombination für eine hydraulische Flüssigkeit auf der Basis von Glykolen beschrieben, die aus Hydrazin oder Hydrazinderivaten als dem einen und aus organischen Säuren als dem anderen Korrosionsinhibitor besteht. Unter den vielen in Betracht kommenden organischen Säuren werden auch Aminocarbonsäuren wie N-Oleoylsarkosin genannt. Dieses Korrosionsinhibitorsystem für Flüssigkeiten auf der Basis von Glykolen genügt den derzeitigen Forderungen nicht. Es ist insbesondere wenig oxidationsstabil, weshalb eine relativ große Menge an Oxidationsstabilisatoren wie Alkylphenolen erforderlich sind, wie aus den Beispielen der Patentschrift hervorgeht.

Auch in der GB-A-2 009 133 wird ein Korrosionsinhibitorsystem aus Aminocarbonsäuren und einer weiteren speziellen Stickstoff enthaltenden organischen Verbindung beschrieben, das insbesondere gegenüber Eisen wirksam sein soll. Neben der geringen Oxidationsstabilität läßt insbesondere die korrosionsinhibierende Wirkung gegenüber Leichtmetallen zu wünschen übrig.

Die Aufgabe der Erfindung besteht nun darin, eine Kühlflüssigkeit auf der Basis von mehrwertigen Alkoholen zur Verfügung zu stellen, insbesondere für Verbrennungsmotoren, die den heutigen Forderungen sowohl hinsichtlich Korrosionsschutz als auch hinsichtlich Kavitationsschutz gerecht wird. Die neue Kühlflüssigkeit soll einen hervorragenden Korrosions- und Kavitationsschutz auch gegenüber

Leichtmetallen, vorzugsweise Aluminium und Aluminiumlegierungen, aufweisen. Sie soll ferner stabil sein, das heißt eine homogene Flüssigkeit sowohl bei tiefen als auch bei hohen Temperaturen darstellen, nicht nennenswert schäumen und leicht zu handhaben sein.

Diese Aufgabe wird erfindungsgemäß gelöst durch eine Kühlflüssigkeit, bestehend im wesentlichen aus

A) mindestens einem mehrwertigen Alkohol aus der Gruppe von Glycerin, Alkylenglykolen mit 2 bis 6 C-Atomen und Oxalkylenglykolen des Oxethylens und/oder Oxpropylens mit insgesamt 4 bis 12 C-Atomen als Hauptbestandteil,

B) einer wirksamen Menge von mindestens einem Korrosionsinhibitor aus der Gruppe Alkaliborate, Alkalibenzoate, Alkalinitrite, Alkalinitrate, Alkalisilicate, Alkaliphosphate, Benztriazole und Alkanolamine und deren Salze, und

C) 0,01 bis 3,0 Gew.-%, bezogen auf das Gewicht der Flüssigkeit, von mindestens einer Verbindung der Formel I

$$R-\underset{\displaystyle R_1}{\underset{|}{N}}-(CH_2)_x-COOM$$

worin bedeuten

R einen Alkyl-, Alkenyl-, Alkanoyl- oder Alkenoylrest mit 4 bis 25 C-Atomen,

$R_1$ Wasserstoff oder einen Alkylrest mit 1 bis 4 C-Atomen,

M Wasserstoff oder ein Alkalimetall, und

x eine ganze Zahl von 1 bis 5.

R bedeutet vorzugsweise einen Alkyl-, Alkenyl-, Alkanoyl- oder Alkenoylrest mit 8 bis 18 C-Atomen, insbesondere mit 12 bis 18 C-Atomen.

$R_1$ bedeutet vorzugsweise Wasserstoff oder einen Alkylrest mit 1 bis 3 C-Atomen, insbesondere Wasserstoff oder den Methylrest.

M bedeutet vorzugsweise Wasserstoff, Natrium oder Kalium.

x bedeutet vorzugsweise eine ganze Zahl von 1 bis 3, insbesondere 1.

Die Reste R und $R_1$ können geradkettig oder verzweigt sein, sie sind vorzugsweise geradkettig. Von den Alkenyl- und Alkenoylresten sind diejenigen mit 1 bis 2 Doppelbindungen in der Kohlenwasserstoff-Kette bevorzugt.

Vorteilhafte Vertreter von R sind beispielsweise : Decyl, Undecyl, Dodecyl, Tridecyl, Tetradecyl, Pentadecyl, Hexadecyl, Heptadecyl, Stearyl, Oleyl, Cocosalkyl, Talgalkyl und Palmkernalkyl, und die entsprechenden Acylreste (Decanoyl, Undecanoyl, Dodecanoyl usw.) Cocosalkyl entspricht der folgenden typischen Kettenverteilung in Gewichtsprozent :

Gesättigt : $C_6$ 0,5 %, $C_8$ 8 %, $C_{10}$ 7 %, $C_{12}$ 48 %, $C_{14}$ 17 %, $C_{16}$ 9 % und $C_{18}$ 2 % ; ungesättigt : $C_{16}$ (mit einer Doppelbindung) 0,2 %, $C_{18}$ (mit einer Doppelbindung) 7 % und $C_{18}$ (mit 2 Doppelbindungen) 1,3 %. Talgalkyl entspricht der folgenden typischen Kettenverteilung in Gewichtsprozent : Gesättigt : $C_{12}$ 0,5 %, $C_{14}$ 3 %, $C_{15}$ 1 %, $C_{16}$ 25 %, $C_{17}$ 2 %, $C_{18}$ 19 % und $C_{20}$ 1 % ; ungesättigt : $C_{14}$ (mit einer Doppelbindung) 0,5 %, $C_{16}$ (mit einer Doppelbindung) 3 %, $C_{18}$ (mit einer Doppelbindung) 40 %, $C_{18}$ (mit zwei Doppelbindungen) 4 % und $C_{18}$ (mit drei Doppelbindungen) 1 %.

Palmkernalkyl entspricht der folgenden typischen Kettenverteilung in Gewichtsprozent : Gesättigt : $C_6$ 0,5 %, $C_8$ 4 %, $C_{10}$ 5 %, $C_{12}$ 50 %, $C_{14}$ 15 %, $C_{16}$ 7 % und $C_{18}$ 2 % ; ungesättigt : $C_{16}$ (mit einer Doppelbindung) 0,5 %, $C_{18}$ (mit einer Doppelbindung) 15 % und $C_{18}$ (mit zwei Doppelbindungen) 1 %.

Die Komponente A der erfindungsgemäßen Kühlflüssigkeit ist vorzugsweise Glycerin, ein Alkylenglykol mit 2 bis 4 C-Atomen und/oder ein Oxalkylenglykol aus der Gruppe von Diethylenglykol, Triethylenglykol, Dipropylenglykol und Tripropylenglykol. Besonders bevorzugt als Komponente A ist Monoethylenglykol, Diethylenglykol, Monopropylenglykol und/oder Dipropylenglykol.

Die Komponente A bildet den Hauptbestandteil der neuen Kühlflüssigkeit. Die Menge beträgt im allgemeinen 87 bis 98 Gew.-%, vorzugsweise 92 bis 97 Gew.-%, bezogen auf das Gewicht der Flüssigkeit (Gesamtgewicht).

Die Komponente B besteht aus einer wirksamen Menge von mindestens einem Korrosionsinhibitor aus der Gruppe der Alkaliborate, Alkalibenzoate, Alkalinitrite, Alkalinitrate, Alkalisilicate, Alkaliphosphate, Benztriazole und Alkanolamine und deren Salze. Da diese Verbindungen im allgemeinen auch pH-Wertstabilisierend wirken, sind eigene Puffersubstanzen nicht mehr erforderlich. In der Regel wird eine Mischung aus den genannten Korrosionsinhibitoren verwendet. Ein bevorzugter Korrosionsinhibitor besteht im wesentlichen aus Alkalitetraborat in einer Menge von 0,5 bis 5 Gew.-%, Alkalibenzoat in einer Menge von 0,5 bis 5 Gew.-%, Alkalinitrit in einer Menge von 0,1 bis 0,6 Gew.-%, Alkalinitrat in einer Menge von 0,05 bis 0,5 Gew.-%, Alkalisilicat in einer Menge von 0,01 bis 0,5 Gew.-% und Benztriazol in einer Menge von 0,01 bis 0,5 Gew.-%, Gewichtsprozent, jeweils bezogen auf das Gewicht der Flüssigkeit.

Die Menge an Korrosionsinhibitor in der erfindungsgemäßen Kühlflüssigkeit beträgt im allgemeinen 2 bis 10 Gew.-%, vorzugsweise 3 bis 7 Gew.-%, bezogen auf das Gewicht der Flüssigkeit.

Die Menge an der Komponente C in der erfindungsgemäßen Kühlflüssigkeit beträgt vorzugsweise 0,05 bis 1 Gew.-%, insbesondere 0,1 bis 0,5 Gew.-%, bezogen auf das Gewicht der Flüssigkeit.

Die erfindungsgemäße Kühlflüssigkeit kann zusätzlich zu den Komponenten A, B und C auch noch zweckmäßige Additive, beispielsweise Antischaummittel, in wirksamen Mengen enthalten.

Als Antischaummittel kommen beispielsweise höhere aliphatische Alkohole, vorzugsweise einwertige Alkohole mit 8 bis 20 C-Atomen, beispielsweise iso-Octylalkohol, iso-Decylalkohol und iso-Tridecylalkohol, in Betracht. Die wirksame Menge liegt bei 0,01 bis 1 Gew.-%, bezogen auf das Gewicht der Flüssigkeit.

Um die Löslichkeit der Komponenten und der Additive zu erleichtern, können geringe Mengen Wasser zugesetzt werden. Die Menge an Wasser beträgt im allgemeinen 0,1 bis 1 Gew.-%, bezogen auf das Gewicht der Flüssigkeit.

Die Herstellung der erfindungsgemäßen Kühlflüssigkeit erfolgt einfach durch Zusammenmischen der einzelnen Komponenten. Dies kann beispielsweise in einem mit Rührer ausgestatteten Behälter vorgenommen werden.

Die erfindungsgemäße Kühlflüssigkeit zeichnet sich durch eine überraschendhohe kavitationshemmende und korrosionshemmende Wirkung aus. Da die einzelnen Komponenten der Flüssigkeit miteinander verträglich sind, ist sie stabil auch bei relativ hohen und tiefen Temperaturen. Sie zeigt, insbesondere bei Verwendung bekannter Antischaummittel, geringe Schaumbildung.

Das erfindungsgemäße Kühlmittel ist vielseitig einsetzbar. Es wird vorzugsweise im Kühlkreislauf von Wärmekraftmaschinen und Pumpen, insbesondere von Verbrennungsmotoren, eingesetzt. Dabei wird es zweckmäßigerweise mit Wasser verdünnt, so daß es in einer Konzentration von 20 bis 45 Volumenprozent vorliegt.

Die Erfindung wird nun durch die folgenden Beispiele noch näher erläutert.

### Beispiel 1

Es wurde eine erfindungsgemäße Kühlflüssigkeit hergestellt durch Mischen der folgenden Komponenten :

94,93 Gew.-% Monoethylenglykol
1,5 Gew.-% Natriumtetraborat (mit 10 $H_2O$)
3,0 Gew.-% Natriumbenzoat
0,02 Gew.-% Natriumsilicat
0,4 Gew.-% Natriumnitrit
0,05 Gew.-% Benztriazol
0,1 Gew.-% 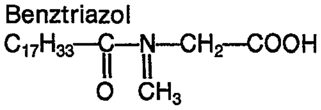 (N-Oleoylsarkosin)

### Beispiel 2

Es wurde eine erfindungsgemäße Kühlflüssigkeit hergestellt durch Mischen der folgenden Komponenten :

93,2 Gew.-% Monopropylenglykol-(1,2)
3,0 Gew.-% Natriumtetraborat (mit 10 $H_2O$)
2,0 Gew.-% Natriumbenzoat
0,5 Gew.-% Natriumnitrit
0,3 Gew.-% Natriumnitrat
1,0 Gew.-% 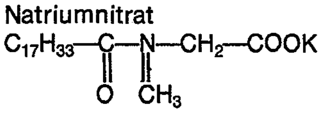 (Kaliumsalz des N-Oleoylsarkosins)

### Beispiel 3

Es wurde eine erfindungsgemäße Kühlflüssigkeit hergestellt durch Mischen der folgenden Komponenten :

98,44 Gew.-% Diethylenglykol
1,0 Gew.-% Natriumtetraborat (mit 10 $H_2O$)
0,06 Gew.-% Benztriazol
0,5 Gew.-% 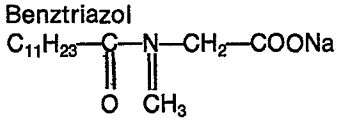 (Natriumsalz des N-Dodecanoylsarkosins oder Lauroylsarkosins)

## Beispiele 4 bis 6

Die Beispiele 4 bis 6 zeigen weitere erfindungsgemäße Kühlflüssigkeiten ; die einzelnen Komponenten und ihre Anteile in Gewichtsprozent sind nachstehend zusammengefaßt :

| Komponenten | Beispiele 4 | 5 | 6 |
|---|---|---|---|
| Monoethylenglykol | 93,92 | -- | -- |
| Monopropylenglykol | -- | 94,7 | -- |
| Diethylenglykol | -- | -- | 96,0 |
| Korrosionsinhibitor | 6,0 | 5,0 | 3,0 |
| Komponente C | 0,08 von der Verb. 4 | 0,3 von der Verb. 5 | 1,0 von der Verb. 6 |

Die Verbindung 4 ist : 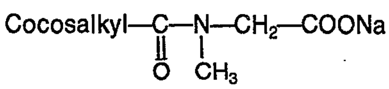

Die Verbindung 5 ist : 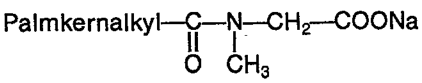

Die Verbindung 6 ist : 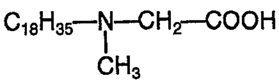 (N-Oleylsarkosin).

## Beispiel 7 = Vergleichsbeispiel

Diese Kühlflüssigkeit besteht aus den Komponenten des Beispiels 1, jedoch ohne den erfindungsgemäßen Zusatz von N-Oleoylsarkosin :

95,03 Gew.-% Monoethylenglykol
1,5 Gew.-% Natriumtetraborat (mit 10 $H_2O$)
3,0 Gew.-% Natriumbenzoat
0,02 Gew.-% Natriumsilikat
0,4 Gew.-% Natriumnitrit
0,05 Gew.-% Benztriazol

Die Prüfung der Kühlflüssigkeiten nach den Beispielen 1 bis 7 auf ihre antikavitative Wirkung erfolgte nach den Vorschriften der Forschungsvereinigung Verbrennungskraftmaschinen E. V. Frankfurt/Main, Bundesrepublik Deutschland.

Diese Vorschriften sind in den Richtlinien zur « Prüfung der Eignung von Kühlmittelzusätzen für die Kühlflüssigkeiten von Verbrennungsmotoren », Heft R 315, Jahr 1977, beschrieben.

Entsprechend dieser Prüfmethode wurde die Gewichtsabnahme von Prüfkörpern aus der Aluminiumlegierung $AlCuMg_2$, gemessen. Je ein Prüfkörper wurde in der zu testenden Flüssigkeit in einer Ultraschallapparatur der Schwingungskavitation ausgesetzt, wobei die Schwingungsfrequenz 20 kHz ± 250 Hz und Amplitude der Schwingung am Prüfkörper 20 µm beträgt, und die Temperatur der Kühlflüssigkeit bei 80 °C ± 1 liegt.

Entsprechend den gennanten Vorschriften wurden jeweils 4 000 ml Flüssigkeit eingesetzt, die dadurch bereitet worden ist, daß die Kühlflüssigkeit gemäß den Beispielen 1 bis 7 mit Wasser 1 : 10 verdünnt wurde. Die Prüfkörper wurden achtmal hintereinander, nach jeweils 10 Minuten Behandlung in der gennanten Ultraschallapparatur, gewogen. Die Auswertung der acht Wägungen pro Prüfkörper und pro Kühlflüssigkeit erfolgte ebenfalls nach den genannten Vorschriften :

Danach werden die ersten vier Wägungen nicht berücksichtigt. Von den restlichen vier Werten wird der höchste und der niedrigste Wert ebenfalls nicht berücksichtigt. Aus den verbleibenden zwei Werten wird das arithmetische Mittel gebildet. Dieser Gewichtswert, ausgedrückt in Milligramm pro Stunde, stellt das Testergebnis, nämlich die Gewichtsabnahme des Prüfkörpers, dar.

Nachstehend sind die Meßergebnisse mit den Kühlflüssigkeiten gemäß den Beispielen 1 bis 7 zusammengefaßt:

| Beispiel | 1 | 2 | 3 | 4 | 5 | 6 | 7 |
|---|---|---|---|---|---|---|---|
| Gewichtsabnahme des Prüfkörpers $AlCuMg_2$ in mg/h | 9,3 | 7,2 | 7,8. | 7,5 | 9,9 | 6,6 | 14,1 |

**Ansprüche**

1. Korrosions- und kavitationshemmende Kühlflüssigkeit, bestehend im wesentlichen aus

A) mindestens einem mehrwertigen Alkohol aus der Gruppe von Glycerin, Alkylenglykolen mit 2 bis 6 C-Atomen und Oxalkylenglykolen des Oxethylens und/oder Oxpropylens mit insgesamt 4 bis 12 C-Atomen als Hauptbestandteil,

B) einer wirksamen Menge von mindestens einem Korrosionsinhibitor aus der Gruppe Alkaliborate, Alkalibenzoate, Alkalinitrite, Alkalinitrate, Alkalisilicate, Alkaliphosphate, Benztriazole und Alkanolamine und deren Salze, und

C) 0,01 bis 3,0 Gew.-%, bezogen auf das Gewicht der Flüssigkeit, von mindestens einer Verbindung der Formel I

$$R-\underset{\displaystyle R_1}{\underset{|}{N}}-(CH_2)_x-COOM$$

worin bedeuten

R einen Alkyl-, Alkenyl-, Alkanoyl- oder Alkenoyl-rest mit 4 bis 25 C-Atomen,

$R_1$ Wasserstoff oder einen Alkylrest mit 1 bis 4 C-Atomen,

M Wasserstoff oder ein Alkalimetall, und

x eine ganze Zahl von 1 bis 5.

2. Kühlflüssigkeit nach Anspruch 1, dadurch gekennzeichnet, daß R einen Alkyl-, Alkenyl-, Alkanoyl- oder Alkenoylrest mit 8 bis 18 C-Atomen, $R_1$ Wasserstoff oder einen Alkylrest mit 1 bis 3 C-Atomen, M Wasserstoff, Natrium oder Kalium, und x eine ganze Zahl von 1 bis 3 bedeutet.

3. Kühlflüssigkeit nach Anspruch 1, dadurch gekennzeichnet, daß R einen Alkyl-, Alkenyl-, Alkanoyl- oder Alkenoylrest mit 12 bis 18 C-Atomen, $R_1$ Wasserstoff oder den Methylrest, M Wasserstoff, Natrium oder Kalium, und x 1 bedeutet.

4. Kühlflüssigkeit nach Anspruch 1, dadurch gekennzeichnet, daß sie die Komponente C) in einer Menge von 0,05 bis 1,0 Gew.-%, bezogen auf das Gewicht der Flüssigkeit, enthält.

5. Kühlflüssigkeit nach Anspruch 1, dadurch gekennzeichnet, daß sie die Komponente B) in einer Menge von 3 bis 7 Gew.-%, bezogen auf das Gewicht der Flüssigkeit, enthält.

**Claims**

1. A corrosion-inhibiting and cavitation-inhibiting cooling liquid, consisting essentially of

A) at least one polyhydric alcohol selected from the group comprising glycerol, alkylene glycols having from 2 to 6 carbon atoms and oxyalkylene glycols of oxyethylene and/or oxypropylene, having a total of 4 to 12 carbon atoms, as the main constituent,

B) an effective amount of at least one corrosion inhibitor selected from the group comprising alkali metal borates, alkali metal benzoates, alkali metal nitrites, alkali metal nitrates, alkali metal silicates, alkali metal phosphates, benzotriazoles, and alkanolamines and salts thereof, and

C) 0.01 to 3. percent by weight, relative to the weight of the liquid, of at least one compound of the formula I

$$R-\underset{\displaystyle R_1}{\underset{|}{N}}-(CH_2)_x-COOM$$

in which

R is an alkyl, alkenyl, alkanoyl, or alkenoyl radical having 4 to 25 carbon atoms,

$R_1$ is hydrogen or an alkyl radical having 1 to 4 carbon atoms,

M is hydrogen or an alkali metal and

x is an integer from 1 to 5.

2. A cooling liquid as claimed in claims 1, wherein R is an alkyl, alkenyl, alkanoyl, or alkenoyl radical having 8 to 18 carbon atoms, $R_1$ is hydrogen or an alkyl radical having 1 to 3 carbon atoms, M is hydrogen, sodium or potassium and x is an integer from 1 to 3.

3. A cooling liquid as claimed in claim 1, wherein R is an alkyl, alkenyl, alkanoyl, or alkenoyl radical having 12 to 18 carbon atoms, $R_1$ is hydrogen or the methyl radical, M is hydrogen, sodium or potassium, and x is 1.

4. A cooling liquid as claimed in claim 1 which contains the component C) in an amount of 0.05 to 1.0 percent by weight, relative to the weight of the liquid.

5. A cooling liquid as claimed in claim 1 which contains the component B) in an amount of 3 to 7 percent by weight, relative of the weight of the liquid.

**Revendications**

1. Liquide de refroidissement inhibiteur de corrosion et de cavitation, caractérisé en ce qu'il comprend essentiellement

A) au moins un polyalcool du groupe comprenant le glycérol, les alkylèneglycols à 2 à 6 atomes de carbone et les glycols oxyalkylénés de l'oxyde d'éthylène et/ou de l'oxyde de propylène avec en tout 4 à 12 atomes de carbone, en tant que constituant principal,

B) une quantité efficace d'au moins un inhibiteur de corrosion du groupe comprenant les borates de métaux alcalins, les benzoates de métaux alcalins, les nitrites de métaux alcalins, les nitrates de métaux alcalins, les silicates de métaux alcalins, les phosphates de métaux alcalins, les benzotriazoles et les alcanolamines et leurs sels, et

C) de 0,01 à 3,0 % en poids, par rapport au poids du liquide, d'au moins un composé de formule I

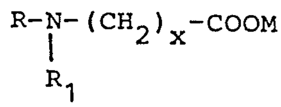 ,

dans laquelle

R est un radical alkyle, alcényle, alcanoyle ou alcénoyle à 4 à 25 atomes de carbone,

$R_1$ est l'hydrogène ou un radical alkyle à 1 à 4 atomes de carbone,

M est l'hydrogène ou un métal alcalin, et

x est un nombre entier de 1 à 5.

2. Liquide de refroidissement selon la revendication 1, caractérisé en ce que R est un radical alkyle, alcényle, alcanoyle ou alcénoyle à 8 à 18 atomes de carbone, $R_1$ est l'hydrogène ou un radical alkyle à 1 à 3 atomes de carbone, M est l'hydrogène, le sodium ou le potassium ; et x est un nombre entier de 1 à 3.

3. Liquide de refroidissement selon la revendication 1, caractérisé en ce que R est un radical alkyle, alcényle, alcanoyle ou alcénoyle à 12 à 18 atomes de carbone, $R_1$ est l'hydrogène ou le radical méthyle, M est l'hydrogène, le sodium ou le potassium, et x vaut 1.

4. Liquide de refroidissement selon la revendication 1, caractérisé en ce qu'il contient le composant C) en une concentration de 0,05 à 1,0 % en poids par rapport au poids du liquide.

5. Liquide de refroidissement selon la revendication 1, caractérisé en ce qu'il contient le composant B) en une concentration de 3 à 7 % en poids par rapport au poids du liquide.